# EUROPEAN PATENT SPECIFICATION

(11) **EP 4 181 598 B1**
(45) Date of publication and mention of the grant of the patent: **05.08.2026**
(21) Application number: 21843396.9
(22) Date of filing: 08.07.2021
(51) Int. Cl.: H04W 72/04

(54) **COLLISION PROCESSING METHOD AND APPARATUS**
VERFAHREN UND VORRICHTUNG ZUR KOLLISIONSVERARBEITUNG
PROCÉDÉ ET APPAREIL DE TRAITEMENT DE COLLISION

(30) Priority: 13.07.2020 CN 202010671468
(43) Date of publication of application: 17.05.2023
(73) Proprietor: Vivo Mobile Communication Co., Ltd., Dongguan, Guangdong 523863 (CN)
(72) Inventor: LI, Na, Dongguan, Guangdong 523863 (CN)
(74) Representative: Conti, Marco
(86) International application number: PCT/CN2021/105310
(87) International publication number: WO 2022/012417

(56) References cited:
- CN-A- 108 521 885
- CN-A- 108 702 776
- CN-A- 110 149 726
- CN-A- 110 149 726
- CN-A- 110 768 773
- CN-A- 110 768 773
- VIVO: "Feature lead summary on Configured grant enhancement", vol. RAN WG1, no. Reno, USA; 20191118 - 20191122, 19 November 2019 (2019-11-19), XP051826593, Retrieved from the Internet <URL:https://ftp.3gpp.org/tsg_ran/WG1_RL1/TSGR1_99/Docs/R1-1912016.zip R1-1912016 FL summary on NRU-CG.docx> [retrieved on 20191119]
- VIVO: "Other aspects on carrier aggregation", vol. RAN WG1, no. Sanya, China; 20180416 - 20180420, 15 April 2018 (2018-04-15), XP051426136, Retrieved from the Internet <URL:http://www.3gpp.org/ftp/Meetings%5F3GPP%5FSYNC/RAN1/Docs/> [retrieved on 20180415]
- QUALCOMM INCORPORATED: "Remaining issues for overlapping UL transmissions", 3GPP DRAFT; R1-1807359, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, 12 May 2018 (2018-05-12), Mobile Competence Centre ; 650, route des Lucioles ; F-06921 Sophia-Antipolis Cedex ; France , pages 1 - 12, XP051463051

## Description

### TECHNICAL FIELD

This application belongs to the field of communications technologies, and specifically, to a collision processing method and apparatus.

### BACKGROUND

In a new radio (new radio, NR) system, user equipment (user equipment, UE) may support different types of services. For example, the user equipment may support services with low latency and high reliability, and may also support services with mass storage and high rate.

Generally, because different channels may have different transmission resources, such as a starting symbol and length, the transmission resources corresponding to the different channels overlap in a time domain, that is, a phenomenon of a resource collision. In related art, if there is a phenomenon of a collision on transmission resources of different uplink transmissions with different priorities in the time domain, the UE cancels a low-priority uplink transmission according to priorities of different uplink transmissions to ensure a high-priority uplink transmission.

However, in the foregoing transmission manner, if there is a collision between transmission resources of different uplink transmissions in the time domain resource, the low-priority uplink transmission is canceled, which may cause failure in the low-priority uplink transmission, resulting in greatly reduced performance of the low-priority uplink transmission.

Document "R1-1912016" summarizes the contributions submitted under the "7.2.2.2.4 Configured grant enhancement" agenda item. Document "CN110768773A" discussed an uplink information multiplexing method. A PUSCH group comprises at least one PUSCH, and each PUSCH in the PUSCH group and the resources of a PUCCH are in the same time unit; the PUCCH comprises a target UCI (Uplink Control Information); a target PUSCH is determined in the PUSCH group according to at least one factor, the target PUSCH being used for bearing the target UCI and discarding the PUCCH; the at least one factor comprises any combination of the PUSCH sending time, a cell sending the PUSCH and the number of modulation symbols after target UCI coding. Document "R1-1803841" discussed the details of PUSCH selection, as well as some remaining issues on carrier aggregation. Some text proposals of corrections for HARQ-ACK codebook of section 9, 38.213 are also provided. Document "CN110149726A" discussed an information transmission method and a terminal, which are used for determining a transmission scheme according to the processing capability and/or conflict condition of the terminal when part of the transmission time of a PUCCH and a PUSCH is conflicted. The method comprises the following steps: when transmission time of information to be transmitted in a physical uplink control channel PUCCH of a terminal partly conflicts with a transmission time of information to be transmitted in a physical uplink shared channel PUSCH, the terminal determines a transmission scheme of the PUCCH and the PUSCH according to own processing capability and/or conflict condition; and the terminal transmits information to be transmitted in the PUCCH and/or the PUSCH according to the determined transmission scheme

### SUMMARY

An objective of embodiments of this application is to provide a collision processing method and apparatus, which may resolve the problem of relatively poor uplink transmission performance when there is a collision on transmission resources of different uplink transmissions on time domain resources.

The scope of the present invention is determined only by the scope of the appended claims. More precisely, in one aspect, the present invention provides a collision processing method according to claim 1 and further detailed in the dependent claims referring back to this claim. A corresponding collision processing apparatus is provided in claim 8.

On the other hand, the present invention provides a readable storage medium according to claim 15.

In this embodiment of this application, in a case that a time domain resource of an uplink control channel overlaps a time domain resource of at least one uplink shared channel, one manner is that the UE directly multiplexes the first control information carried on the uplink control channel to an uplink shared channel in at least one uplink shared channel, and the other manner is that the UE may multiplex the first control information to an uplink shared channel in at least one uplink shared channel for transmission according to the information of the first control information carried on the uplink control channel. In a first manner, the UE directly multiplexes the first control information to an uplink shared channel for transmission without performing other determining. Compared with related art, the transmission of the control information on the uplink control channel may be ensured, and the problem that UCI on the low-priority PUCCH cannot be transmitted on the premise of priority determining is avoided. In a second manner, the UE may combine the information of the first control information on the control channel, such as the priority of the first control information, the quantity of bits of the first control information, the type of the first control information, or the like, to determine which shared channel to which first control information is multiplexed, which may cause the UE to determine how to deal with the problem that the time domain resources of the uplink channel overlap according to more manners, thereby improving the transmission performance of the UE.

### BRIEF DESCRIPTION OF THE DRAWINGS

FIG. 1 is a schematic diagram of a communication system according to an embodiment of this application;
FIG. 2 is a schematic flowchart of a collision processing method according to an embodiment of this application;
FIG. 3 is a schematic diagram 1 of a resource collision according to an embodiment of this application;
FIG. 4 is a schematic diagram 2 of a resource collision according to an embodiment of this application;
FIG. 5 is a schematic diagram 3 of a resource collision according to an embodiment of this application;
FIG. 6 is a possible schematic structural diagram of a collision processing apparatus according to an embodiment of this application;
FIG. 7 is a schematic diagram of a communication device according to an embodiment of this application; and
FIG. 8 is a schematic diagram of a hardware structure of UE according to an embodiment of this application.

### DETAILED DESCRIPTION

First, some concepts and/or terms involved in a collision processing method and device provided in embodiments of this application are explained.

### 1. Transmission resources overlap in a time domain (or referred to as a time domain collision)

Compared with conventional mobile communications systems, 5G mobile communications systems in the future need to adapt to more diversified scenarios and service requirements. Main scenarios of 5G include enhanced mobile broad band (enhanced mobile broad band, eMBB), massive machine type communications (massive machine type communications, mMTC), and ultra-reliable and low latency communications (ultra-reliable and low latency communications, URLLC). The scenarios raise requirements, such as high reliability, low latency, large bandwidth, and broad coverage, for mobile communications systems. The UE may support different services. For example, the UE supports not only services of URLLC with low latency and high reliability, but also the eMBB services with mass capacity and high rate. In a new radio (new radio, NR) system, because different channels may have different starting symbols and lengths, a case that transmission resources overlap in a time domain occurs. Generally, to maintain uplink single-carrier features, when there are a plurality of overlapping uplink transmission resources in a slot for transmission, the single-carrier features of the UE are destroyed, and a difference in emitting power causes the channel estimation performance to deteriorate. The condition is often regarded as a type of collision, and a corresponding collision solution needs to be designed to merge or discard some information.

### 2. Uplink transmission

A physical uplink control channel (physical uplink control channel, PUCCH) transmitted by UE.

A physical uplink shared channel (physical uplink shared channel PUSCH) transmitted by UE.

A physical random access channel (physical random access channel, PRACH) transmitted by UE.

A sounding reference signal (sounding reference signal, SRS) of a channel transmitted by UE.

### 3. Collision processing on a PUCCH and a PUSCH

In NR R15, simultaneous transmission of both the PUCCH and the PUSCH is not supported whether the PUCCH and the PUSCH are in the same serving cell or different serving cells in a PUCCH group (PUCCH group). When the time domain resource of the PUCCH overlaps the time domain resource of the PUSCH (including a part of time domain resources overlap and all time domain resources overlap), the UE discards or merges the time domain resource of the PUCCH and the time domain resource of the PUSCH according to a corresponding rule in a case that a specific time requirement is met.

For example, if a time domain of a PUCCH that carries a scheduling request (scheduling request, SR) overlaps a time domain of a PUSCH that does not carry an uplink shared channel (uplink shared channel, UL-SCH), the UE discards the PUSCH and transmits the SR PUCCH. Alternatively, the UE multiplexes uplink control information (uplink control information, UCI) (except SR) carried on the PUCCH to the PUSCH for transmission. For example, the PUCCH 1 that carries hybrid automatic repeat request acknowledgement (hybrid automatic repeat request acknowledgement, HARQ-ACK) or channel state information (channel state information, CSI) overlaps the PUSCH 2, then, the UE multiplexes the HARQ-ACK/CSI carried on the PUCCH 1 to the PUSCH 2 for transmission.

Specifically, the UE first deals with time domain resources overlapping (if any) in a plurality of PUCCHs, and the obtained result after processing is one or more PUCCHs whose non-time domain resources overlap. Then, the UE deals with the time domain resources overlapping between the PUCCH and the PUSCH. If the PUCCH only overlaps one PUSCH, the UE multiplexes the UCI (excluding the SR) to the PUSCH. If the PUCCH only overlaps a plurality of PUSCHs, the UE selects a PUSCH for multiplexing according to a first multiplexing rule in the related art. The first multiplexing rule (that is, an order in which the UE selects to multiplex the PUSCH of the UCI) is as follows:
Rule 1: a PUSCH that carries aperiodic channel state information (Aperiodic CSI, A-CSI).
Rule 2: a PUSCH with an earliest starting slot.
Rule 3: a dynamically scheduled PUSCH>a configured grant PUSCH or a semi-persistent (semi-persistent) PUSCH.
Rule 4: a PUSCH with a small index (index) of a serving cell>a PUSCH with a large index of a serving cell.
Rule 5: a PUSCH with an earlier transmission symbol>a PUSCH with a later transmission symbol.

In the NR R16 research, considering different requirements of different services, a two-level priority indication of a physical layer is introduced. A transmission priority identifier is introduced in the transmission of the PUCCH and the transmission of the PUSCH, where a high priority may correspond to a priority index 1 and a low priority may correspond to a priority index 0.

Specifically, a physical layer priority of the PUCCH is determined by a priority of the UCI carried on the PUCCH. For example, the priority of the SR is configured through radio resource control (radio resource control, RRC). A priority of periodic CSI and a priority of semi-persistent CSI (SP-CSI) are predefined as low priorities, and a priority of HARQ-ACK is indicated by DCI corresponding to the HARQ-ACK or determined according to the configuration of semi-persistent scheduling (semi-persistent scheduling, SPS). The transmission priority of the PUSCH is indicated by the scheduling downlink control information (downlink control information, DCI) corresponding to the PUSCH, or for the configured grant PUSCH, a priority of the configured grant PUSCH is configured by the RRC.

When the time domain resource of the PUCCH overlaps the time domain resource of the PUCCH or the time domain resource of the PUCCH overlaps the time domain resource of the PUSCH, the UE first processes the transmission with the same priority, and then, processes the transmission with different priorities. When processing different priorities, the UE cancels the transmission (or referred to as discarding) of a low-priority uplink resource and transmits a high-priority uplink resource in a case that a specific time requirement is met.

The technical solutions in the embodiments of this application are clearly and completely described below with reference to the accompanying drawings in the embodiments of this application. Apparently, the described embodiments are merely some rather than all of the embodiments of this application. All other embodiments obtained by a person of ordinary skill in the art based on the embodiments of this application without creative efforts shall fall within the protection scope of this application, as defined by the appended claims.

In the specification and claims of this application, terms "first" and "second" are used to distinguish similar objects, but are not used to describe a specific sequence or order. It may be understood that the terms used in such a way is interchangeable in proper circumstances, so that the embodiments of this application can be implemented in other sequences than the sequence illustrated or described herein. In addition, objects distinguished by "first" and "second" are usually of a type, and the number of objects is not limited. For example, a first object may be one or more than one. In addition, in the specification and claims, "and/or" means at least one of the connected objects, and the character "/" generally indicates an "or" relationship between associated objects.

It should be noted that, the technology described in this embodiment of this application is not limited to a long term evolution (Long Term Evolution, LTE)/LTE evolution (LTE-Advanced, LTE-A) system, but may further be used in other wireless communication systems, such as code division multiple access (code division multiple access, CDMA), time division multiple access (time division multiple access, TDMA), frequency division multiple access (frequency division multiple access, FDMA), orthogonal frequency division multiple access, (orthogonal frequency division multiple access, OFDMA), single-carrier frequency-division multiple access (single-carrier frequency-division multiple access, SC-FDMA), and other systems. The terms "system" and "network" in this embodiment of this application are often used interchangeably, and the described technologies may be used both for the systems and radio technologies mentioned above and may also be used for other systems and radio technologies. However, the following descriptions describe a new radio (new radio, NR) system for the objective of being used as an example, and NR terms are used in most of the descriptions below. These technologies may also be applied to applications other than NR system applications, such as a 6th generation (6th Generation, 6G) communication system.

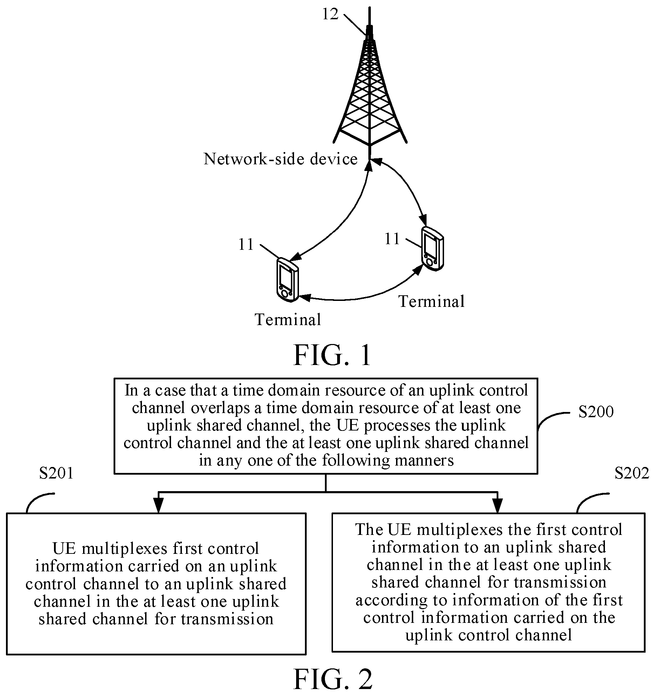

FIG. 1 is a block diagram of a wireless communication system to which an embodiment of this application may be applied. The wireless communication system includes a terminal 11 and a network-side device 12. The terminal 11 may also be referred to as a terminal device or user equipment (user equipment, UE). The terminal 11 may be a terminal-side device such as a mobile phone, a tablet computer (tablet personal computer), a laptop computer (laptop computer), or referred to as a notebook computer, a personal digital assistant (personal digital assistant, PDA), a palmtop computer, a netbook, an ultra-mobile personal computer (ultra-mobile personal computer, UMPC), a mobile Internet device (mobile internet device, MID), a wearable device (wearable device), or vehicle user equipment (VUE), and pedestrian user equipment, (PUE). The wearable device includes: a bracelet, headphones, glasses, or the like. it should be noted that, in this embodiment of this application, a specific type of a terminal 11 is not limited. The network-side device 12 may be a base station or a core network, where the base station may be referred to as a node B, an evolved node B, an access point, a base transceiver station (base transceiver station, BTS), a radio base station, a radio transceiver, a basic service set (basic service set, BSS), an extended service set (extended service set, ESS), a node B, an evolved node B (eNB), a household B node, a household evolved B node, a WLAN access point, a WiFi node, a transmitting receiving point (transmitting receiving point, TRP) or some other proper terms in the field. Provided that the same technical effect is achieved, the base station is not limited to a specific technical vocabulary. It should be noted that, in this embodiment of this application, only a base station in the NR system is used as an example, but a specific type of the base station is not limited.

The collision processing method provided in this embodiment of this application is described in detail below by using specific embodiments and application scenarios with reference to the accompanying drawings.

FIG. 2 is a schematic flowchart of a collision processing method according to an embodiment of this application. As shown in FIG. 2, the method includes S200 and S201 below, or includes S200 and S202 below:
S200. In a case that a time domain resource of an uplink control channel overlaps a time domain resource of at least one uplink shared channel, UE processes the uplink control channel and the at least one uplink shared channel in any one of the following manners.

For example, for ease of description, a first manner is denoted as S201 and a second manner is denoted as S202.

S201. The UE multiplexes first control information carried on the uplink control channel to an uplink shared channel in the at least one uplink shared channel for transmission.

For example, in this embodiment of this application, the uplink control channel may be a physical uplink control channel (physical uplink control channel, PUCCH), and may also be other types of uplink control channels. The uplink shared channel may be a physical uplink shared channel (physical uplink shared channel, PUSCH), and certainly may also be other types of uplink control channels.

In this embodiment of this application, time domain resource overlapping may also be referred to as a time domain resource collision.

In this embodiment of this application, the first control information may be uplink control information (uplink control information, UCI), and may also be other information carried on the uplink control channel.

For example, the first control information may include: a scheduling request (scheduling request, SR), hybrid automatic repeat request acknowledge (hybrid automatic repeat request acknowledge, HRAQ-ACK), and CSI, where the CSI may be at least one of P-CSI or SP-CSI.

Generally, the uplink shared channel may be divided into different uplink shared channels according to different grant manners, such as a dynamic grant (dynamic grant, DG) PUSCH, that is, a PUSCH dynamically scheduled by DCI, a configured grant (configured grant, CG) PUSCH, a semi-persistent PUSCH (semi-persistent PUSCH), or the like.

For ease of description, in this embodiment of this application, a description is made by using an example in which an uplink control channel is a PUCCH, an uplink shared channel is a PUSCH, and first control information is UCI carried on the PUCCH.

In the solution, in a case that the PUCCH overlaps at least one PUSCH time domain resource, the UE does not need to be based on other information. For example, the UE does not need to be based on priorities (physical layer priorities) of the PUCCH and the PUSCH. The UCI carried on the PUCCH is directly multiplexed to a PUSCH for transmission. That is, the UE may multiplex the UCI to the PUSCH having the same priority or different priorities for transmission.

S202. The UE multiplexes the first control information to an uplink shared channel in the at least one uplink shared channel for transmission according to information of the first control information carried on the uplink control channel.

In this embodiment of this application, the information of the first control information includes at least one of the following: a priority of the first control information, a quantity of bits of the first control information, or a type of the first control information.

It should be noted that, a priority of control information may be divided into two priority levels such as a high priority and a low priority, may also be divided into three priority levels such as a high priority, a medium priority, and a low priority, and may also be divided into more priority levels, which is not specifically limited in this embodiment of this application.

It should be noted that, the priority of the control information carried on the uplink control channel may be used as the priority of the uplink control channel.

For example, in this embodiment of this application, the priority of the control information or the priority of the uplink control channel may be indicated according to a priority index (priority index), the control information or the priority of the uplink control channel may be configured through predefinition or RRC signaling, or the control information or the priority of the uplink channel may also be indicated through an indication field in DCI. When the UCI carried on the uplink control channel has the same priority, the priority of the uplink control channel is the same as the priority of the UCI carried on the uplink control channel. When the UCI carried on the uplink control channel has different priorities, the priority of the uplink control channel may be determined by the priority of the UCI carried on the uplink control channel, for example, the priority of the uplink control channel is determined by the highest/lowest priority of the UCI carried on the uplink control channel.

For example, in a case that a priority is divided into two priority levels such as a high priority and a low priority, a priority index 0 may indicate the low priority and a priority index 1 may indicate the high priority.

In the collision processing method provided in this embodiment of this application, in a case that a time domain resource of an uplink control channel overlaps a time domain resource of at least one uplink shared channel, one manner is that the UE directly multiplexes the first control information carried on the uplink control channel to an uplink shared channel in at least one uplink shared channel, and the other manner is that the UE may multiplex the first control information to an uplink shared channel in at least one uplink shared channel according to the information of the first control information carried on the uplink control channel for transmission. In a first manner, the UE directly multiplexes the first control information to an uplink shared channel for transmission without performing other determining. Compared with related art, the transmission of the control information on the uplink control channel may be ensured, and the problem that UCI on the low-priority PUCCH cannot be transmitted on the premise of priority determining is avoided. In a second manner, the UE may combine the information of the first control information on the control channel, such as the priority of the first control information, the quantity of bits of the first control information, the type of the first control information, or the like, to determine which shared channel to which first control information is multiplexed, which may cause the UE to determine how to deal with the problem that the time domain resources of the uplink channel overlap according to more manners, thereby improving the transmission performance of the UE.

In this embodiment of this application, the UE may combine the priority of the control information carried on the uplink control channel to deal with a problem that there is a collision between the time domain resource of the uplink control channel and the time domain resource of the uplink shared channel by using a first possible implementation or a second possible implementation described below.

In a first implementation which is according to the invention,
in the collision processing method provided in this embodiment of this application, the information of the first control information includes the priority of the first control information; and the at least one uplink shared channel includes a plurality of uplink shared channels. Further, the S202 may be performed by S202a or S202b below:

S202a. In a case that control information in the first control information has a same priority, and the plurality of uplink shared channels include a first uplink shared channel, the UE multiplexes the first control information to the first uplink shared channel in the plurality of uplink shared channels for transmission.

A priority of the first uplink shared channel is the same as the priority of the first control information.

That is, the UE may preferentially multiplex the UCI to an uplink shared channel whose priority is the same as the priority of the UCI for transmission.

It should be noted that, the priority of the first uplink shared channel may also be indicated by a priority index (priority index), be indicated by a type of information that is carried, be configured by the RRC signaling, or be indicated by an indication field in the DCI.

It may be understood that, in a case that control information in the first control information has a same priority, and the plurality of uplink shared channels include an uplink shared channel whose priority is the same as the priority of the control information, the UE may preferentially multiplex the control information on the uplink control channel to an uplink shared channel whose priority is the same as the priority of the control information for transmission.

### Scenario 1:

The UCI carried on the PUCCH (that is, the first uplink shared channel) has the same priority, there is a collision between the time domain resource of the PUCCH and the time domain resources of a plurality of PUSCHs (that is, a plurality of uplink shared channels), and there is a PUSCH (that is, the first uplink shared channel) whose priority is the same as the priority of the UCI in the plurality of PUSCHs.

For example, the UE may transmit the UCI by multiplexing according to the priority of the UCI according to a multiplexing manner 1-1, a multiplexing manner 1-2, or a multiplexing manner 1-3 below.

### Multiplexing manner 1-1:

If the UCI is high-priority UCI, the UE may multiplex the UCI carried on the PUCCH to a high-priority PUSCH for transmission.

### Multiplexing manner 1-2:

If the UCI is low-priority UCI, the UE may multiplex the UCI carried on the PUCCH to a low-priority PUSCH for transmission.

### Multiplexing manner 1-3:

If the UCI is medium-priority UCI, the UE may multiplex the UCI carried on the PUCCH to a medium-priority PUSCH for transmission.

S202b. In a case that control information in the first control information has a same priority, and the plurality of uplink shared channels do not include a first uplink shared channel, the UE multiplexes the first control information to the second uplink shared channel in the plurality of uplink shared channels for transmission.

A priority of the first uplink shared channel is the same as the priority of the first control information. A priority of the second uplink shared channel is different from the priority of the first control information.

It may be understood that, in a case that the priority of the control information carried on the uplink control channel is the same priority, and a plurality of uplink shared channels do not include the uplink shared channel whose priority is the same as the priority of the uplink shared channel, the UE may multiplex the control information on the uplink control channel to an uplink shared channel whose priority is different from the priority of the uplink shared channel for transmission.

### Scenario 2:

The UCI carried on the PUCCH has the same priority, there is a collision between the time domain resource of the PUCCH and the time domain resources of a plurality of PUSCHs, and there is not a PUSCH whose priority is the same as the priority of the UCI in the plurality of PUSCHs.

For example, using the priority being divided into a high priority and a low priority as an example, in the scenario 2, the UE may perform multiplexing and transmission according to a multiplexing manner 2-1 and a multiplexing manner 2-2 below.

### Multiplexing manner 2-1:

If the UCI is high-priority UCI and a plurality of PUSCHs do not include a high-priority PUSCH, the UE may multiplex the UCI carried on the PUCCH to a low-priority PUSCH for transmission.

### Multiplexing manner 2-2:

If the UCI is low-priority UCI and a plurality of PUSCHs do not include a low-priority PUSCH, the UE may multiplex the UCI carried on the PUCCH to the high-priority PUSCH for transmission.

For example, using the priority being divided into a high priority, a medium priority, and a low priority as an example, in the scenario 2, the UE may perform multiplexing and transmission according to a multiplexing manner 2-3, a multiplexing manner 2-4, and a multiplexing manner 2-5 below.

### Multiplexing manner 2-3:

If the UCI is high-priority UCI and a plurality of PUSCHs do not include a high-priority PUSCH, the UE may multiplex the UCI carried on the PUCCH to a low-priority PUSCH for transmission, or multiplex the UCI carried on the PUCCH to a medium-priority PUSCH for transmission.

### Multiplexing manner 2-4:

If the UCI is medium-priority UCI and a plurality of PUSCHs do not include a medium-priority PUSCH, the UE may multiplex the UCI carried on the PUCCH to a high-priority PUSCH for transmission, or multiplex the UCI carried on the PUCCH to the low-priority PUSCH for transmission.

### Multiplexing manner 2-5:

If the UCI is low-priority UCI and a plurality of PUSCHs do not include a low-priority PUSCH, the UE may multiplex the UCI carried on the PUCCH to the high-priority PUSCH for transmission, or multiplex the UCI carried on the PUCCH to the medium-priority PUSCH for transmission.

It may be understood that, in a case that control information in the first control information has a same priority, and the plurality of uplink shared channels include an uplink shared channel whose priority is the same as the priority of the control information, the UE may preferentially multiplex the control information on the uplink control channel to an uplink shared channel whose priority is the same as the priority of the control information for transmission. In a case that a plurality of uplink shared channels do not include an uplink shared channel whose priority is the same as the priority of the uplink shared channel, the UE may multiplex the control information on the uplink control channel to another uplink shared channel for transmission.

### A second possible implementation

Optionally, in the collision processing method provided in this embodiment of this application, the information of the first control information includes the priority of the first control information; and the at least one uplink shared channel includes a plurality of uplink shared channels; and further, the S202 may be performed by S202c or S202d below:

S202c. In a case that the first control information includes control information having different priorities, and the plurality of uplink shared channels include a third uplink shared channel, the UE multiplexes the first control information to the third uplink shared channel in the plurality of uplink shared channel for transmission.

For example, the third uplink shared channel may be an uplink shared channel whose priority is the same as the highest priority of the control information in a plurality of uplink shared channels.

It may be understood that, in a case that the control information carried on the uplink control channel includes control information having different priorities, and the plurality of uplink shared channels include an uplink shared channel whose priority is the same as the highest priority of the control information, the UE may preferentially multiplex the control information carried on the uplink control channel to the uplink shared channel whose priority is the same as the highest priority of the control information for transmission.

### Scenario 3:

The UCI carried on the PUCCH has different priorities, there is a collision between a time domain resource of a PUCCH and time domain resources of a plurality of PUSCHs, and there is a PUSCH (that is, the third uplink shared channel) whose priority is the same as the high priority in the plurality of different PUSCHs.

For example, the UE may transmit the UCI by multiplexing according to the priority of the UCI and the priority of the PUSCH according to a multiplexing manner 3-1, a multiplexing manner 3-2, and a multiplexing manner 3-3 below.

### Multiplexing manner 3-1:

If the UCI carried on the PUCCH includes high-priority UCI and low-priority UCI, and there is a high-priority PUSCH in a plurality of PUSCHs, the UCI carried on the PUCCH is multiplexed to the high-priority PUSCH for transmission.

### Multiplexing manner 3-2:

If the UCI carried on the PUCCH includes high-priority UCI, medium-priority UCI, and low-priority UCI, and there is a high-priority PUSCH in a plurality of PUSCHs, the UCI carried on the PUCCH is multiplexed to the high-priority PUSCH for transmission.

### Multiplexing manner 3-3:

If the UCI carried on the PUCCH includes medium-priority UCI and low-priority UCI, and there is a medium-priority PUSCH in a plurality of PUSCHs, the UCI carried on the PUCCH is multiplexed to the medium-priority PUSCH for transmission.

S202d. In a case that the first control information includes control information having different priorities, and the plurality of uplink shared channels do not include a third uplink shared channel, the UE multiplexes the first control information to the fourth uplink shared channel in the plurality of uplink shared channel for transmission.

A priority of the third uplink shared channel is higher than a priority of the fourth uplink shared channel.

Optionally, in this embodiment of this application, a priority of the third uplink shared channel is the same as the highest priority in the priority of the first control information. A priority of the fourth uplink shared channel is different from the highest priority of the priority of the first control information.

Specifically, in a case that priorities are two priorities such as a high priority and a low priority, the third uplink shared channel is the high-priority uplink shared channel, and the fourth uplink shared channel is the low-priority uplink shared channel. If priorities are three priorities such as a high priority, a medium priority, and a low priority, and the third uplink shared channel is the high-priority uplink shared channel, the fourth uplink shared channel is the medium-priority uplink shared channel, and may also be a low-priority uplink shared channel; and if the third uplink shared channel is a medium-priority uplink shared channel, the fourth uplink shared channel is a low-priority uplink shared channel.

It may be understood that, in a case that the control information carried on the uplink control channel includes different priorities, and the plurality of shared channels do not include an uplink shared channel whose priority is the same as the highest priority of the control information, the control information carried on the uplink control channel may be multiplexed to another uplink shared channel whose priority is different from the highest priority in the control information in a plurality of shared channels for transmission.

### Scenario 4:

The UCI carried on the PUCCH has different priorities, there is a collision between the time domain resource of the PUCCH and the time domain resources of the plurality of PUSCHs, and there is not a PUSCH whose priority is the same as the high priority in the plurality of different PUSCHs.

the UE may transmit the UCI by multiplexing according to the priority of the UCI and the priority of the PUSCH according to a multiplexing manner 4-1, a multiplexing manner 4-2, and a multiplexing manner 4-3 below.

### Multiplexing manner 4-1:

If the UCI carried on the PUCCH includes the high-priority UCI and the low-priority UCI, and there is not a high-priority PUSCH in the plurality of PUSCHs, the UE multiplexes the UCI carried on the PUCCH to the medium-priority PUSCH or the low-priority PUSCH for transmission.

It should be noted that, if the priority includes two priority levels such as a high priority and a low priority, the UE multiplexes the UCI carried on the PUCCH to the lower-priority PUSCH for transmission; and if the priority includes three priority levels such as a high priority, a medium priority, and a low priority, the UE multiplexes the UCI carried on the PUCCH to the medium-priority PUSCH or the low-priority PUSCH for transmission.

### Multiplexing manner 4-2:

If the UCI carried on the PUCCH includes the high-priority UCI, the medium-priority UCI, and the low-priority UCI, and there is not a high-priority PUSCH in a plurality of PUSCHs, the UCI carried on the PUCCH is multiplexed to the medium-priority PUSCH or the low-priority PUSCH for transmission.

### Multiplexing manner 4-3:

If the UCI carried on the PUCCH includes the medium-priority UCI and the low-priority UCI, and there is not a medium-priority PUSCH in a plurality of PUSCHs, the UCI carried on the PUCCH is multiplexed to the low-priority PUSCH for transmission, and the UCI carried on the PUCCH is multiplexed to the high-priority PUSCH for transmission.

It may be understood that, in a case that control information carried on the uplink control channel includes different priorities, if the plurality of uplink shared channels include an uplink shared channel whose priority is the same as the highest priority of the control information, the control information carried on the uplink control channel may be preferentially multiplexed to the uplink shared channel whose priority is the same as the highest priority of the control information for transmission. If the plurality of uplink shared channels do not include an uplink shared channel whose priority is the same as the highest priority of the control information, the control information carried on the uplink control channel may be multiplexed to the uplink shared channel of other priorities in the plurality of shared channels for transmission.

It should be noted that, in this embodiment of this application, in the foregoing several implementations, if a plurality of uplink control channels whose time domain resources do not overlap respectively overlap time domain resources of a plurality of uplink shared channels having different priorities, the control information carried in the plurality of uplink control channels may be respectively multiplexed to different uplink shared channels.

Optionally, in the collision processing method provided in this embodiment of this application, the plurality of uplink shared channels are uplink shared channels that meet a multiplexing time.

It should be noted that, when the UE processes a channel having different priorities, the channel is discarded, and a transmission channel also needs a processing time. A discarding/canceling time requirement is defined in the related art when the UE processes the channel having different priorities, and a multiplexing time may be determined according to the time requirement.

For example, the UE preferentially selects a PUSCH that meets the multiplexing time in a plurality of PUSCHs, and performs multiplexing according to the first possible processing manner or the second possible processing manner in the PUSCH that meets the multiplexing time.

It may be understood that, an uplink shared channel that meets the multiplexing time is selected to perform multiplexing, so that the problem that the uplink transmission that does not meet the multiplexing time finally fails to be successfully multiplexed may be avoided.

In this embodiment of this application, if the UE does not support simultaneous transmission of the PUCCH and the PUSCH, the implementation may be used to deal with a collision between the time domain resource of the uplink control channel and the time domain resource of the uplink shared channel. In a scenario in which the UE may support the simultaneous transmission of a PUCCH and a PUSCH, the UE may deal with the collision between the time domain resource of the uplink control channel and the time domain resource of the uplink shared channel according to a third possible implementation or a fourth possible implementation below.

In the third possible implementation,
optionally, in the collision processing method provided in this embodiment of this application, the information of the first control information includes the priority of the first control information; and the uplink control channel includes a first uplink control channel and a second uplink control channel, and a priority of control information carried on the first uplink control channel is lower than a priority of control information carried on the second uplink control channel.

The S202 may be specifically performed by S202e below:
S202e. The UE multiplexes control information carried on the first uplink control channel to an uplink shared channel in the at least one uplink shared channel for transmission.

The collision processing method provided in this embodiment of this application further includes S203a below:
S203a. The UE transmits the second uplink control channel.

It should be noted that, the S202e and S203a may be performed together, and may also be respectively performed.

It may be understood that, the uplink transmission of low-priority control information in the two uplink control channels may be multiplexed to at least one uplink shared channel for transmission, and an uplink control channel with high-priority control information in the two uplink control channels may be independently transmitted.

### Scenario 5:

An uplink control channel colliding with time domain resources of at least one PUSCH (that is, at least one uplink shared channel) includes a PUCCH 1 (that is, a first control channel) and a PUCCH 2 (that is, a second control channel), where the time domain resource of the PUCCH 1 overlaps the time domain resource of the PUCCH 2, and the priority of the UCI carried on the PUCCH 1 is lower than the priority of the UCI carried on the PUCCH 2, or the priority of the PUCCH 1 is lower than the priority of the PUCCH 2.

### Multiplexing manner 5-1:

The UE multiplexes the UCI carried on the PUCCH 1 to a PUSCH of at least one PUSCH for transmission. In addition, the PUCCH 2 is independently transmitted. That is, the UE respectively transmits the PUCCH 2 and multiplexes the PUSCH of the UCI carried on the PUCCH 1.

In the fourth possible implementation,
optionally, in the collision processing method provided in this embodiment of this application, the information of the first control information includes the priority of the first control information; and the uplink control channel includes a first uplink control channel and a second uplink control channel, and a priority of control information carried on the first uplink control channel is lower than a priority of control information carried on the second uplink control channel.

The S202 may be performed by S202f or S202g below:
S202f. The UE multiplexes, in a case that the at least one uplink shared channel includes an uplink shared channel of a fifth priority, the control information carried on the first uplink control channel to the uplink shared channel of the fifth priority in the at least one uplink shared channel for transmission.

For example, the fifth priority may be a priority equal to the priority of the control information carried on the first uplink control channel in the at least one uplink shared channel.

The collision processing method provided in this embodiment of this application may further include S203b below:
S203b. The UE transmits the second uplink control channel.

It should be noted that, the S202f and S203b may be performed together, and may also be respectively performed.

It may be understood that, in a case that priorities of the control information respectively carried on two uplink control channels colliding with each other are different, if at least one uplink shared channel includes an uplink shared channel whose priority is the same as the priority of the low-priority control information, the low-priority control information may be multiplexed to a low-priority uplink shared channel for transmission, and the high-priority uplink control channel may be independently transmitted.

For example, in the scenario 5, the UE may further use a multiplexing manner 5-2 below.

### Multiplexing manner 5-2:

If at least one PUSCH includes a low-priority PUSCH, the UE multiplexes the UCI carried on the PUCCH 1 to the low-priority PUSCH in the at least one PUSCH for transmission.

S202g. The UE multiplexes, in a case that the at least one uplink shared channel includes an uplink shared channel of a sixth priority, the control information carried on the second uplink control channel to the uplink shared channel of the sixth priority in the at least one uplink shared channel for transmission.

The collision processing method provided in this embodiment of this application further includes S203c below:
S203c. The UE transmits the first uplink control channel.

The fifth priority is lower than the sixth priority.

It should be noted that, the S202g and S203c may be performed together, and may also be respectively performed.

It may be understood that, in a case that the priorities of the control information respectively carried on the two uplink control channels colliding with each other are different, if at least one uplink shared channel includes an uplink shared channel whose priority is the same as the high-priority control information, the high-priority control information may be multiplexed to a high-priority uplink shared channel for transmission, and the low-priority uplink control channel may be independently transmitted.

For example, in the scenario 5, the UE may further use a multiplexing manner 5-3 below to perform multiplexing and transmission.

### Multiplexing manner 5-3:

If at least one PUSCH includes a high-priority PUSCH, the UE may multiplex the UCI carried on the PUCCH 2 to the high-priority PUSCH in the at least one PUSCH for transmission.

In a scenario in which the UE may support the simultaneous transmission of a PUCCH and a PUSCH, the UE may further combine at least one of a quantity of bits of the control information and the control information to deal with a collision between the time domain resource of the uplink control channel and the time domain resource of the uplink shared channel according to an implementation below.

Optionally, in the collision processing method provided in this embodiment of this application, the information of the first control information includes at least one of the quantity of bits of the first control information or the type of the first control information; the uplink control channel includes a first uplink control channel and a second uplink control channel; and

The S202 may be specifically performed by S202h below:
S202h. The UE multiplexes, according to information of control information carried on the first uplink control channel and information of control information carried on the second uplink control channel, the control information carried on an uplink control channel of the first uplink control channel and the second uplink control channel to an uplink shared channel in the at least one uplink shared channel for transmission.

The collision processing method provided in this embodiment of this application further includes S203d below:
S203d. The UE transmits the other uplink control channel of the first uplink control channel and the second uplink control channel.

It should be noted that, the S202h and S203d may be performed together, and may also be respectively performed.

Optionally, in a case that the information of the first control information is the quantity of bits of the first control information, the control information with a relatively small quantity of bits carried on the first uplink control channel and the second uplink control channel may be multiplexed to an uplink shared channel for transmission.

Optionally, in a case that the information of the first control information is the quantity of bits of the first control information, the control information with a relatively large quantity of bits carried on the first uplink control channel and the second uplink control channel may be multiplexed to an uplink shared channel on an uplink shared channel for transmission.

### Scenario 6:

The uplink control channels that overlap time domain resources of at least one PUSCH include the PUCCH 1 and the PUCCH 2, and the time domain resource of the PUCCH 1 overlaps the time domain resource of the PUCCH 2, where the quantity of bits of the UCI carried on the PUCCH 1 is greater than the quantity of bits of the UCI carried on the PUCCH 2.

### Multiplexing manner 6-1:

The UE multiplexes the UCI carried on the PUCCH 1 whose UCI having a relatively large quantity of bits to the PUSCH, and independently transmits the PUCCH 2.

### Multiplexing manner 6-2:

The UE multiplexes the UCI carried on the PUCCH 2 whose UCI having a relatively small quantity of bits to the PUSCH, and independently transmits the PUCCH 1.

### Scenario 7:

The uplink control channels that overlap the time domain resources of at least one PUSCH include the PUCCH 1 and the PUCCH 2, and the time domain resource of the PUCCH 1 overlaps the time domain resource of the PUCCH 2, where the UCI carried on the PUCCH 1 is HARQ-ACK, and the UCI carried on the PUCCH 2 is CSI.

### Multiplexing manner 7-1:

The UE multiplexes the CSI carried on the PUCCH 2 to the PUSCH for transmission, and independently transmits the PUCCH 1 carried on the HARQ-ACK.

In addition to the foregoing possible implementations, the UE may further use a fifth possible implementation below to deal with a problem that there is a collision between the time domain resource of the uplink control channel and the time domain resource of the uplink shared channel in a case that the simultaneous transmission of the PUCCH and the PUSCH is supported.

In the fifth possible implementation,
optionally, in the collision processing method provided in this embodiment of this application, the information of the first control information includes the priority of the first control information; and the at least one uplink shared channel includes a plurality of uplink shared channels.

The S202 may be specifically performed by S202i or S202j below:
S202i. If the plurality of uplink shared channels include an uplink shared channel whose priority is the same as the priority of the first control information, the UE multiplexes the first control information to an uplink shared channel whose priority is the same as the priority of the control information.

### Scenario 8:

The PUCCH overlaps at least one PUSCH time domain resource, where at least one PUSCH includes a plurality of PUSCHs.

### Multiplexing manner 8-1:

If the at least one PUSCH includes the high-priority PUSCH whose priority is the same as the priority of the high-priority UCI, the UCI carried on the PUCCH is multiplexed to the high-priority PUSCH for transmission.

### Multiplexing manner 8-2:

If the at least one PUSCH includes the medium-priority PUSCH whose priority is the same as the priority of the medium-priority UCI, the UCI carried on the PUCCH is multiplexed to the medium-priority PUSCH for transmission.

### Multiplexing manner 8-2:

If the at least one PUSCH includes the low-priority PUSCH whose priority is the same as the priority of the low-priority UCI, the UCI carried on the PUCCH is multiplexed to the low-priority PUSCH for transmission.

S202j. If the plurality of uplink shared channels do not include an uplink shared channel whose priority is the same as the priority of the first control information, the UE multiplexes the first control information to an uplink shared channel in the plurality of uplink shared channels.

It should be noted that, an uplink shared channel that is multiplexed may be determined according to the multiplexing rule, and may also be determined according to other manners, such as a randomly confirmed one, which is not specifically limited in this embodiment of this application.

It should be noted that, the fifth possible implementation may further be used with reference to the first multiplexing rule. That is, if the multiplexing rule 2 includes a rule that whether being the same as the priority of the control information carried on the control channel, then, when selecting the PUSCH by using the rule, the step S202i or step S202j may be used.

Optionally, in the collision processing method provided in this embodiment of this application, the information of the first control information includes the priority of the first control information; and the at least one uplink shared channel includes a plurality of uplink shared channels; and The S201 may be specifically performed by S202k, S202l, or S202m below:

S202k. In response to determining that the plurality of uplink shared channels include at least two uplink shared channels having a same priority as the priority of the first control information according to the priority of the first control information, the UE multiplexes, according to a first multiplexing rule, the first control information to an uplink shared channel of the at least two uplink shared channels for transmission.

The first multiplexing rule may be determined according to at least one of the following: whether carrying aperiodic channel state information, a starting slot, a scheduling type, an index of a serving cell corresponding to an uplink transmission, or a location of a transmission symbol.

S202l. In response to determining that the plurality of uplink shared channels do not include an uplink shared channels having a same priority as the priority of the first control information according to the priority of the first control information, the UE multiplexes, according to a first multiplexing rule, the first control information to an uplink shared channel in the plurality of uplink shared channels for transmission.

It may be understood that, in the foregoing solution, the UE may determine that pieces of data of the uplink shared channel that may be multiplexed are more than one according to a manner of the priority of the first control information, and then, the UE may be triggered to select an uplink shared channel to multiplex the first control information by using the first multiplexing rule in the related art. If it is determined that the plurality of uplink shared channels do not include uplink shared channels having the same priority according to the priority of the first control information, the UE may directly select an uplink shared channel to multiplex the first control information according to the first multiplexing rule.

### Example 1:

In a case that the first multiplexing rule is determined according to whether carrying aperiodic channel state information, a starting slot, a scheduling type, an index of a serving cell corresponding to an uplink transmission, or a location of a transmission symbol, selection may be performed according to a first multiplexing rule below.

### First multiplexing rule

Rule 1: a PUSCH carrying A-CSI;
rule 2: a PUSCH with an earliest starting slot;
rule 3: a dynamically scheduled PUSCH>a configured grant PUSCH or a semi-persistent PUSCH;
rule 4: a PUSCH with a small index (index) of a serving cell>a PUSCH with a large index of a serving cell; and
rule 5: a PUSCH with an earlier starting symbol>a PUSCH with a later starting symbol.

S202m. The UE multiplexes, according to a second multiplexing rule, the first control information carried on the uplink control channel to an uplink shared channel in the plurality of uplink shared channels for transmission.

The second multiplexing rule may be determined according to at least one of the following: whether carrying aperiodic channel state information, a starting slot, a scheduling type, an index of a serving cell corresponding to an uplink transmission, a location of a transmission symbol, or whether being the same as a priority of control information carried on a control channel.

It may be understood that, in the solution, the UE may directly select an uplink shared channel to multiplex the first control information according to the second multiplexing rule.

### Example 2:

In a case that the second multiplexing rule is determined according to whether carrying aperiodic channel state information, a starting slot, a scheduling type, an index of a serving cell corresponding to an uplink transmission, a location of a transmission symbol, or whether being the same as the priority of the control information carried on the control channel, selection may be performed according to the second multiplexing rule below.
Rule 0: A PUSCH whose priority is the same as the priority of the UCI carried on the PUCCH. It should be noted that, in the scenario, the UCI carried on PUCCH may have the same priority.
   or
Rule 0: A PUSCH whose priority is the same as the highest priority of the UCI carried on the PUCCH. It should be noted that, in the scenario, the UCI carried on the PUCCH may have different priorities.

Further, the second multiplexing rule may include the rule 0 and the rule 1 to rule 5 in the first multiplexing rule. The rule 0 may be located before the rule 1 of the first multiplexing rule, between the rule 1 and rule 5, or after the rule 5.

In the example 2-1, the rule 0 may be located before the rule 1 of the first multiplexing rule, and then, the second multiplexing rule may be in the following form:
rule 0: A PUSCH whose priority is the same as the priority of the UCI carried on the PUCCH;
rule 1: a PUSCH carrying A-CSI;
rule 2: a PUSCH with the earliest starting slot;
rule 3: a dynamically scheduled PUSCH>a configured grant PUSCH or a semi-persistent PUSCH;
rule 4: a PUSCH with a small index (index) of a serving cell>a PUSCH with a large index of a serving cell; and
rule 5: a PUSCH with an earlier starting symbol>a PUSCH with a later starting symbol.

In the example 2-2, the rule 0 is located between the rule 2 and the rule 3, and then, the second multiplexing rule may be in the following form:
rule 1: a PUSCH carrying A-CSI;
rule 2: a PUSCH with the earliest starting slot;
rule 0: a PUSCH whose priority is the same as the priority of the UCI carried on the PUCCH;
rule 3: a dynamically scheduled PUSCH>a configured grant PUSCH or a semi-persistent PUSCH;
rule 4: a PUSCH with a small index (index) of a serving cell>a PUSCH with a large index of a serving cell; and
rule 5: a PUSCH with an earlier starting symbol>a PUSCH with a later starting symbol.

It should be noted that, if there is no PUSCH whose priority is the same as the priority of the UCI, the UCI is multiplexed to a PUSCH for transmission according to other multiplexing rules in the second multiplexing rule.

Based on the solution, in a case that a plurality of time domain resources of the uplink shared channel overlap the time domain resource of the uplink control channel, the UE may select an uplink shared channel from the plurality of uplink shared channels according to the multiplexing rule, and then, multiplex the control information carried on the uplink control channel to the uplink shared channel and transmit the multiplexed uplink shared channel.

For ease of description, a high priority (high priority) is denoted as HP and a low priority (low priority) is denoted as LP.

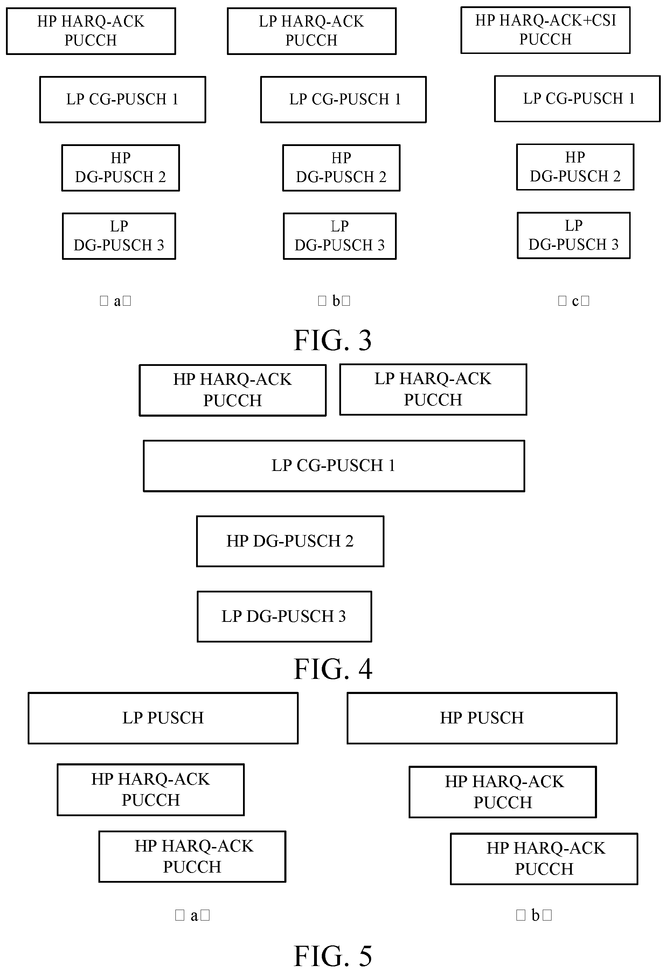

For example, FIG. 3 is a schematic diagram of a resource collision according to an embodiment of this application. As shown in (a) in FIG. 3, a time domain resource of HP HARQ-ACK PUCCH (that is, a PUCCH carrying HP HARQ-ACK) collides with a time domain resource of an LP CG-PUSCH 1, a time domain resource of an HP CG-PUSCH 2, or a time domain resource of an LP DG-PUSCH 3; as shown in (b) in FIG. 3, a time domain resource of an LP HARQ-ACK PUCCH collides with a time domain resource of an LP CG-PUSCH 1, a time domain resource of an HP CG-PUSCH 2, or a time domain resource of an LP DG-PUSCH 3; and as shown in (c) in FIG. 3, a PUCCH carrying HP HARQ-ACK and CSI collides with a time domain resource of an LP CG-PUSCH 1, a time domain resource of an HP CG-PUSCH 2, or a time domain resource of an LP DG-PUSCH 3, where the PUSCH is in different serving cells respectively.

Specifically, according to a processing manner in the related art, for the PUCCH and the PUSCH having the same priority, with reference to (a) in FIG. 3, the UCI is multiplexed to the PUSCH 2, and with reference to (b) in FIG. 3, the UCI is multiplexed to the PUSCH 3. When supporting uplink channels having different priorities to perform multiplexing, if only LP UCI is carried on the PUCCH, according to the related art, the LP UCI may be multiplexed to an HP PUSCH, which affects the transmission performance of the HP PUSCH. In this embodiment of this application, if the UCI carried on the PUCCH is only the LP UCI, the UCI may be multiplexed to the LP PUSCH in a case that a plurality of PUSCHs include the LP PUSCH. With reference to (b) in FIG. 3, the UCI may be multiplexed to the LP CG-PUSCH 1 or LP DG-PUSCH 3 for transmission, thereby reducing the impact on the transmission performance of the HP PUSCH. If only the HP UCI is carried on the PUCCH, the UCI may be multiplexed to the HP PUSCH in a case that a plurality of PUSCHs include the HP PUSCH. With reference to (a) in FIG. 3, the UCI may be multiplexed to the HP DG-PUSCH 2. Because an MCS modulation order of the HP PUSCH may be relatively low and a transmission power is relatively great (relative to the LP PUSCH) during transmission, the transmission performance of the HP UCI may be better ensured. If the UCI carried on the PUCCH has both the LP UCI and the HP UCI, the UCI may be preferentially multiplexed to the HP PUSCH. With reference to (c) in FIG. 3, the UCI may be multiplexed to the HP DG-PUSCH 2. Because a modulation and coding scheme (modulation and coding scheme, MCS) of the HP PUSCH may have a relatively low modulation order and a relatively great transmission power (relative to the LP PUSCH) during transmission, the transmission performance of the HP UCI may be better ensured. Alternatively, if the UCI carried on the PUCCH has both the LP UCI and the HP UCI, the UCI may be preferentially multiplexed to the LP PUSCH. With reference to (c) in FIG. 3, the UCI may be multiplexed to the LP CG-PUSCH 1, or multiplexed to the LP DG-PUSCH 3 for transmission. Alternatively, if the UCI carried on PUCCH has both the LP UCI and the HP UCI, it may be determined whether the UCI is preferentially multiplexed to the HP PUSCH or the LP PUSCH according to the quantity of bits of the HP UCI and the quantity of bits of the LP UCI. For example, when the quantity of bits of the HP UCI is not less than the quantity of bits of the LP UCI, the UCI is preferentially multiplexed to the HP PUSCH, otherwise, the UCI is preferentially multiplexed to the LP PUSCH.

In this embodiment of this application, any one of the processing manners in this embodiment of this application may be used for performing processing, so that the UE may select more multiplexing manners, thereby reducing the impact on transmission performance.

For example, FIG. 4 is a schematic diagram of a resource collision according to an embodiment of this application. As shown in FIG. 4, a PUCCH 1 carrying HP HARQ-ACK and a PUCCH 2 carrying LP HARQ-ACK respectively collide with a time domain resource of an LP CG-PUSCH 1, a time domain resource of an HP CG-PUSCH 2, or a time domain resource of an LP DG-PUSCH 3; and the PUCCH 1 does not collide with the PUCCH 2.

It should be noted that, in this embodiment of this application, if a PUCCH whose plurality of time domain resources do not overlap (including the HP PUCCH and the LP PUCCH) respectively overlaps a plurality of time domain resources of a PUSCH having different priorities, the control information carried on the HP PUCCH and the control information carried on the LP PUCCH may be respectively multiplexed to different PUSCHs according to a transmission processing manner provided in this embodiment of this application. As shown in FIG. 4, the HP HARQ-ACK is multiplexed to the HP DG-PUSCH 2, and the LP HARQ-ACK may be multiplexed to the LP CG-PUSCH 1 or the LP DG-PUSCH 3.

For example, FIG. 5 is a schematic diagram of a resource collision according to an embodiment of this application. As shown in (a) in FIG. 5, both a PUCCH 1 carrying HP HARQ-ACK and a PUCCH 2 carrying LP HARQ-ACK overlap a time domain resource of an LP PUSCH, and a time domain resource of the PUSCH 1 overlaps a time domain resource of the PUSCH 2. As shown in (b) in FIG. 5, both a PUCCH 1 carrying HP HARQ-ACK and a PUCCH 2 carrying LP HARQ-ACK overlap a time domain resource of an LP PUSCH, and a time domain resource of the PUSCH 1 overlaps a time domain resource of the PUSCH 2.

With reference to (a) in FIG. 5, both the LP HARQ-ACK PUCCH and the HP HARQ-ACK PUCCH overlap the time domain resource of the LP PUSCH. If the related technology does not support the simultaneous transmission of the PUCCH and the PUSCH, the UE will cancel the transmission of the LP HARQ-ACK PUCCH and the LP PUSCH, and only transmit the HP HARQ-ACK PUCCH. In this way, an LP service is greatly affected. In this embodiment of this application, when the simultaneous transmission of the PUCCH and the PUSCH is supported, it indicates that the UE may simultaneously transmit a PUCCH and a PUSCH. That is, one of LP HARQ-ACK PUCCH and HP HARQ-ACK PUCCH may be transmitted in (a) in FIG. 5, which may be dealed with according to the third processing manner or the fourth processing manner in this embodiment of this application; and the UE may multiplex the LP HARQ-ACK to the PUSCH for transmission, and the HP HARQ-ACK is still transmitted on the PUCCH. That is, the UE simultaneously transmits and multiplexes the PUSCH of the LP HARQ-ACK and the HP HARQ-ACK PUCCH. In this way, the reliability of the transmission of the HP HARQ-ACK PUCCH is ensured, and the LP HARQ-ACK and the PUSCH are capable of being transmitted, thereby reducing the impact on a low-priority service. Alternatively, if the PUSCH includes the LP PUSCH, the UE multiplexes the LP HARQ-ACK to the LP PUSCH for transmission, and the HP HARQ-ACK is still transmitted on the PUCCH. That is, the UE simultaneously transmits and multiplexes the PUSCH and the HP HARQ-ACK PUCCH; and if the PUSCH only has the HP PUSCH, the UE multiplexes the HP HARQ-ACK to the PUSCH and independently transmits the LP PUCCH. Certainly, the UE may also determine which piece of UCI of the PUCCH is multiplexed to the PUSCH according to the quantity of bits of the UCI carried on the HP PUCCH and the LP PUCCH. For example, the UCI having a relatively small quantity of bits is multiplexed to the PUSCH and the other PUCCH is independently transmitted.

It should be noted that, in the collision processing method provided in this embodiment of this application, the execution entity may be a collision processing apparatus, or a control module configured to perform the collision processing method in the collision processing apparatus. In this embodiment of this application, the collision processing apparatus performing the collision processing method is used as an example to describe the collision processing apparatus provided in this embodiment of this application.

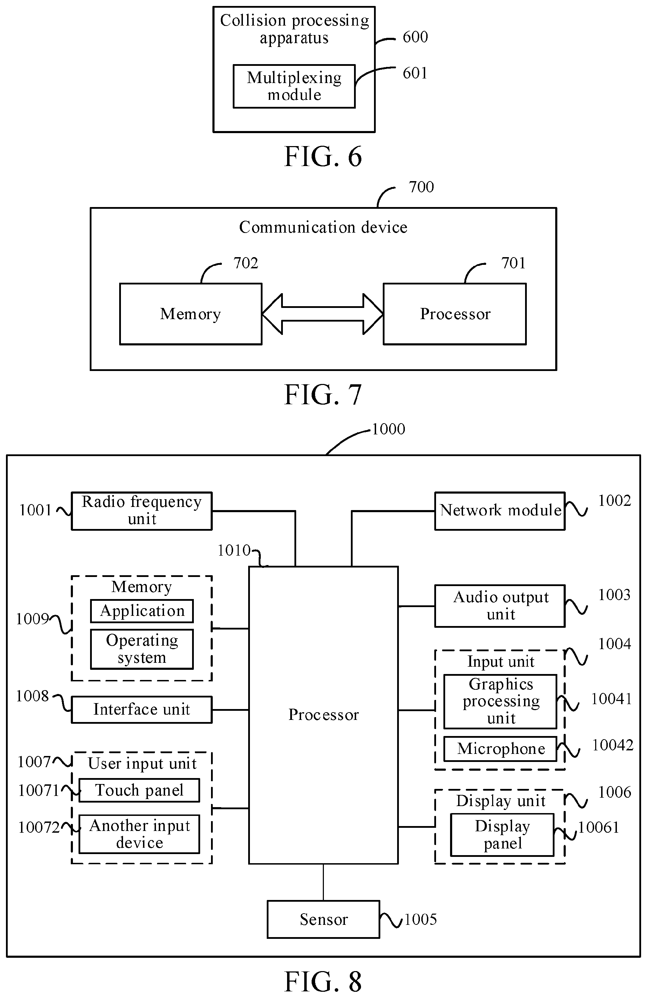

FIG. 6 is a collision processing apparatus provided in this embodiment of this application. As shown in FIG. 6, the collision processing apparatus 600 includes: a multiplexing module 601, where the multiplexing module 601 is configured to process, in a case that a time domain resource of an uplink control channel overlaps a time domain resource of at least one uplink shared channel, the uplink control channel and the at least one uplink shared channel in any one of the following manners: multiplexing first control information carried on the uplink control channel to an uplink shared channel in the at least one uplink shared channel for transmission; and multiplex the first control information to an uplink shared channel in the at least one uplink shared channel for transmission according to information of the first control information carried on the uplink control channel, where the information of the first control information includes at least one of the following: a priority of the first control information, a quantity of bits of the first control information, or a type of the first control information.

Optionally, the at least one uplink shared channel includes a plurality of uplink shared channels; and the multiplexing module is further configured to multiplex, according to a first multiplexing rule, the first control information to an uplink shared channel in the plurality of uplink shared channels for transmission.

Optionally, the information of the first control information includes the priority of the first control information; the at least one uplink shared channel includes a plurality of uplink shared channels; and the multiplexing module is further configured to, in a case that control information in the first control information has a same priority, and the plurality of uplink shared channels include a first uplink shared channel, multiplex the first control information to the first uplink shared channel in the plurality of uplink shared channels for transmission; or in a case that control information in the first control information has a same priority, and the plurality of uplink shared channels do not include a first uplink shared channel, multiplex the first control information to the second uplink shared channel in the plurality of uplink shared channels for transmission, where a priority of the first uplink shared channel is the same as the priority of the first control information, and a priority of the second uplink shared channel is different from the priority of the first control information.

Optionally, the information of the first control information includes the priority of the first control information; the at least one uplink shared channel includes a plurality of uplink shared channels; and the multiplexing module is further configured to, in a case that the first control information includes control information having different priorities, and the plurality of uplink shared channels include a third uplink shared channel, multiplex the first control information to the third uplink shared channel in the plurality of uplink shared channel for transmission; or in a case that the first control information includes control information having different priorities, and the plurality of uplink shared channels do not include a third uplink shared channel, multiplex the first control information to the fourth uplink shared channel in the plurality of uplink shared channels for transmission, where A priority of the third uplink shared channel is higher than a priority of the fourth uplink shared channel.

Optionally, the plurality of uplink shared channels are uplink shared channels that meet a multiplexing time.

Optionally, the information of the first control information includes the priority of the first control information; the uplink control channel includes a first uplink control channel and a second uplink control channel, and a priority of control information carried on the first uplink control channel is lower than a priority of control information carried on the second uplink control channel; the collision processing apparatus further includes: a transmission module, where the multiplexing module is further configured to multiplex the control information carried on the first uplink control channel to an uplink shared channel in the at least one uplink shared channel for transmission; and the transmission module is configured to transmit the second uplink control channel.

Optionally, the information of the first control information includes the priority of the first control information; the uplink control channel includes a first uplink control channel and a second uplink control channel, and a priority of control information carried on the first uplink control channel is lower than a priority of control information carried on the second uplink control channel; the collision processing apparatus further includes: a transmission module, where the multiplexing module is further configured to multiplex, in a case that the at least one uplink shared channel includes an uplink shared channel of a fifth priority, the control information carried on the first uplink control channel to the uplink shared channel of the fifth priority in the at least one uplink shared channel for transmission; the transmission module is configured to transmit the second uplink control channel; or the multiplexing module is further configured to multiplex, in a case that the at least one uplink shared channel includes an uplink shared channel of a sixth priority, the control information carried on the second uplink control channel to the uplink shared channel of the sixth priority in the at least one uplink shared channel for transmission; and the transmission module is configured to transmit the first uplink control channel, where The fifth priority is lower than the sixth priority.

Optionally, the information of the first control information includes at least one of the quantity of bits of the first control information or the type of the first control information; the uplink control channel includes a first uplink control channel and a second uplink control channel; and the collision processing apparatus further includes: a transmission module, where the multiplexing module is further configured to multiplex, according to information of control information carried on the first uplink control channel and information of control information carried on the second uplink control channel, the control information carried on one uplink control channel of the first uplink control channel and the second uplink control channel to an uplink shared channel in the at least one uplink shared channel for transmission; and the transmission module is configured to transmit the other uplink control channel of the first uplink control channel and the second uplink control channel.

Optionally, the information of the first control information includes the priority of the first control information; the at least one uplink shared channel includes a plurality of uplink shared channels; and the multiplexing module is further configured to, in response to determining that the plurality of uplink shared channels include at least two uplink shared channels having a same priority as the priority of the first control information according to the priority of the first control information, multiplex, according to a first multiplexing rule, the first control information to one uplink shared channel of the at least two uplink shared channels for transmission; or in response to determining that the plurality of uplink shared channels do not include uplink shared channels having a same priority as the priority of the first control information according to the priority of the first control information, multiplex, according to a first multiplexing rule, the first control information to an uplink shared channel in the plurality of uplink shared channels for transmission, where the first multiplexing rule is determined according to at least one of the following: whether carrying aperiodic channel state information, a starting slot, a scheduling type, an index of a serving cell corresponding to an uplink transmission, or a location of a transmission symbol.

Optionally, the information of the first control information includes the priority of the first control information; the at least one uplink shared channel includes a plurality of uplink shared channels; and the multiplexing module is further configured to multiplex, according to a second multiplexing rule, the first control information carried on the uplink control channel to an uplink shared channel in the plurality of uplink shared channels for transmission, where the second multiplexing rule is determined according to at least one of the following: whether carrying aperiodic channel state information, a starting slot, a scheduling type, an index of a serving cell corresponding to an uplink transmission, a location of a transmission symbol, or whether being the same as a priority of control information carried on a control channel.

In the collision processing apparatus provided in this embodiment of this application, in a case that a time domain resource of an uplink control channel overlaps a time domain resource of at least one uplink shared channel, one manner is that the collision processing apparatus directly multiplexes the first control information carried on the uplink control channel to an uplink shared channel in at least one uplink shared channel, and the other manner is that the UE may multiplex the first control information to an uplink shared channel in at least one uplink shared channel for transmission according to the information of the first control information carried on the uplink control channel. In a first manner, the collision processing apparatus directly multiplexes the first control information on an uplink shared channel without performing other determining. Compared with related art, the transmission of the control information on the uplink control channel may be ensured, and the problem that UCI on the low-priority PUCCH fails to be transmitted on the premise of priority determining is avoided. In a second manner, the collision processing apparatus may combine the information of the first control information on the control channel, such as the priority of the first control information, the quantity of bits of the first control information, the type of the first control information, or the like, to determine which shared channel to which the first control information is multiplexed, which may cause the collision processing apparatus to determine how to deal with the problem that the time domain resources of the uplink channel overlap according to more manners, thereby improving the transmission performance of the collision processing apparatus.

The collision processing apparatus in this embodiment of this application may be an apparatus, and may also be a component in a terminal, an integrated circuit, or a chip. The apparatus may be a mobile terminal, or may be a non-mobile terminal. For example, the mobile terminal may include, but is not limited to, a type of the terminal 11 listed above, and a non-mobile terminal may be a server, a network attached storage (network attached storage, NAS), a personal computer (personal computer, PC), a television (television, TV), a cash machine, a self-service machine, or the like, which is not specifically limited in this embodiment of this application.

The collision processing apparatus in this embodiment of this application may be an apparatus having an operating system. The operating system may be an Android (Android) operating system, may be an iOS operating system, and may further be another possible operating system, which is not specifically limited in this embodiment of this application.

The collision processing apparatus provided in this embodiment of this application may implement various processes of the method embodiments in FIG. 1 to FIG. 5, and implement the same technical effect, which will not be described in detail herein again to avoid repetition.

Optionally, as shown in FIG. 7, this embodiment of this application further provides a communication device 700, including a processor 701, a memory 702, and a program or instruction stored on the memory 702 and executable on the processor 701. For example, when the communication device 700 is UE, the program or instruction, when executed by the processor 701, implements various processes of the collision processing method embodiment, and may implement the same technical effect. To avoid repetition, details are not described herein again.

FIG. 8 is a schematic diagram of a hardware structure of UE according to an embodiment of this application. The UE 1000 includes, but is not limited to, components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art may understand that, the UE 1000 may further include the power supply (such as a battery) for supplying power to the components. The power supply may be logically connected to the processor 1010 by using a power management system, thereby implementing functions such as charging, discharging, and power consumption management by using the power management system. A UE structure shown in FIG. 8 does not constitute a limitation to the UE, and the UE may include more or fewer components than those shown in the figure, or some components may be combined, or a different component deployment may be used, and details are not repeated herein.

It should be understood that, in this embodiment of this application, the input unit 1004 may include a graphics processing unit (graphics processing unit, GPU) 10041 and a microphone 10042. The graphics processing unit 10041 performs processing on image data of a static picture or a video that is obtained by an image acquisition device (for example, a camera) in a video acquisition mode or an image acquisition mode. The display unit 1006 may include a display panel 1061, and the display panel 10061 may be configured by using a liquid crystal display, an organic light-emitting diode, or the like. The user input unit 1007 includes a touch panel 10071 and another input device 10072. The touch panel 10071 is also referred to as a touchscreen. The touch panel 10071 may include two parts: a touch detection apparatus and a touch controller. The another input device 10072 may include, but not limited to, a physical keyboard, a functional key (such as a volume control key or a switch key), a track ball, a mouse, and a joystick, which are not described herein in detail.

In this embodiment of this application, the radio frequency unit 1001 receives downlink data from a network-side device and transmits the downlink data to the processor 1010 for processing; and sends uplink data to the network-side device. Generally, the radio frequency unit 1001 includes, but is not limited to, an antenna, at least one amplifier, a transceiver, a coupler, a low noise amplifier, a duplexer, and the like.

The memory 1009 may be configured to store a software program or an instruction and various data. The memory 1009 may mainly include a program or instruction storage area and a data storage area. The program or instruction storage area may store an operating system, an application program or instruction required by at least one function (such as a sound playback function and an image display function), and the like. In addition, the memory 1009 may include a high-speed random access memory, and may further include non-volatile memory. The non-volatile memory may be a read-only memory (read-only memory, ROM), a programmable read-only memory (programmable ROM, PROM), an erasable programmable read-only memory (erasable prom, EPROM), an electrically erasable programmable read-only memory (electrically EPROM, EEPROM), or a flash memory. Such as at least one magnetic disk storage device, a flash memory device, or other non-volatile solid-state storage devices.

The processor 1010 may include one or more processing units; and optionally, the processor 1010 may integrate an application processor and a modem processor. The application processor mainly processes an operating system, a user interface, an application program or instruction, and the like. The modem processor mainly processes wireless communication, such as a baseband processor. It may be understood that the foregoing modem may either not be integrated into the processor 1010.

The processor 1010 is configured to process, in a case that a time domain resource of an uplink control channel overlaps a time domain resource of at least one uplink shared channel, the uplink control channel and the at least one uplink shared channel in any one of the following manners: multiplexing first control information carried on the uplink control channel to an uplink shared channel in the at least one uplink shared channel for transmission; and multiplex the first control information to an uplink shared channel in the at least one uplink shared channel for transmission according to information of the first control information carried on the uplink control channel, where the information of the first control information includes at least one of the following: a priority of the first control information, a quantity of bits of the first control information, or a type of the first control information.

Optionally, the at least one uplink shared channel includes a plurality of uplink shared channels; and the processor 1010 is further configured to multiplex, according to a first multiplexing rule, the first control information to an uplink shared channel in the plurality of uplink shared channels for transmission.

Optionally, the information of the first control information includes the priority of the first control information; the at least one uplink shared channel includes a plurality of uplink shared channels; and the processor 1010 is further configured to multiplex, in a case that control information in the first control information has a same priority, the first control information to the first uplink shared channel in the plurality of uplink shared channels for transmission; or in a case that control information in the first control information has a same priority, and the plurality of uplink shared channels do not include a first uplink shared channel, multiplex the first control information to the second uplink shared channel in the plurality of uplink shared channels for transmission, where a priority of the first uplink shared channel is the same as the priority of the first control information, and a priority of the second uplink shared channel is different from the priority of the first control information.

Optionally, the information of the first control information includes the priority of the first control information; the at least one uplink shared channel includes a plurality of uplink shared channels; and the processor 1010 is further configured to multiplex, in a case that the first control information includes control information having different priorities, the first control information to the third uplink shared channel in the plurality of uplink shared channels for transmission; or in a case that the first control information includes control information having different priorities, and the plurality of uplink shared channels do not include a third uplink shared channel, multiplex the first control information to the fourth uplink shared channel in the plurality of uplink shared channels for transmission, where a priority of the third uplink shared channel is higher than a priority of the fourth uplink shared channel.

Optionally, the plurality of uplink shared channels are uplink shared channels that meet a multiplexing time.

Optionally, the information of the first control information includes the priority of the first control information; the uplink control channel includes a first uplink control channel and a second uplink control channel, and a priority of control information carried on the first uplink control channel is lower than a priority of control information carried on the second uplink control channel; the processor 1010 is further configured to multiplex the control information carried on the first uplink control channel to an uplink shared channel in the at least one uplink shared channel for transmission; and the frequency unit 1001 is configured to transmit the second uplink control channel.

Optionally, the information of the first control information includes the priority of the first control information; the uplink control channel includes a first uplink control channel and a second uplink control channel, and a priority of control information carried on the first uplink control channel is lower than a priority of control information carried on the second uplink control channel; the processor 1010 is further configured to multiplex, in a case that the at least one uplink shared channel includes an uplink shared channel of a fifth priority, the control information carried on the first uplink control channel to the uplink shared channel of the fifth priority in the at least one uplink shared channel for transmission; the frequency unit 1001 is configured to transmit the second uplink control channel; or the processor 1010 is further configured to multiplex, in a case that the at least one uplink shared channel includes an uplink shared channel of a sixth priority, the control information carried on the second uplink control channel to the uplink shared channel of the sixth priority in the at least one uplink shared channel for transmission; and the frequency unit 1001 is configured to transmit the first uplink control channel, where the fifth priority is lower than the sixth priority.

Optionally, the information of the first control information includes at least one of the quantity of bits of the first control information or the type of the first control information; the uplink control channel includes a first uplink control channel and a second uplink control channel; and the processor 1010 is further configured to multiplex, according to information of control information carried on the first uplink control channel and information of control information carried on the second uplink control channel, the control information carried on one uplink control channel of the first uplink control channel and the second uplink control channel to an uplink shared channel in the at least one uplink shared channel for transmission; and the frequency unit 1001 is configured to transmit the other uplink control channel of the first uplink control channel and the second uplink control channel.

Optionally, the information of the first control information includes the priority of the first control information; the at least one uplink shared channel includes a plurality of uplink shared channels; the processor 1010 is further configured to multiplex, in a case that the plurality of uplink shared channels include an uplink shared channel whose priority is the same as the priority of the first control information, the first control information to an uplink shared channel whose priority is the same as the priority of the first control information; or multiplex, if the plurality of uplink shared channels do not include an uplink shared channel whose priority is the same as the priority of the first control information, the first control information to an uplink shared channel in the plurality of uplink shared channels.

This embodiment of this application further provides UE, in a case that a time domain resource of an uplink control channel overlaps a time domain resource of at least one uplink shared channel, one manner is that the UE directly multiplexes the first control information carried on the uplink control channel to an uplink shared channel in at least one uplink shared channel, and the other manner is that the UE may multiplex the first control information to an uplink shared channel in at least one uplink shared channel according to the information of the first control information carried on the uplink control channel for transmission. In a first manner, the UE directly multiplexes the first control information to an uplink shared channel for transmission without performing other determining. Compared with related art, the transmission of the control information on the uplink control channel may be ensured, and the problem that UCI on the low-priority PUCCH cannot be transmitted on the premise of priority determining is avoided. In a second manner, the UE may combine the information of the first control information on the control channel, such as the priority of the first control information, the quantity of bits of the first control information, the type of the first control information, or the like, to determine which shared channel to which first control information is multiplexed, which may cause the UE to determine how to deal with the problem that the time domain resources of the uplink channel overlap according to more manners, thereby improving the transmission performance of the UE.

This embodiment of this application further provides a readable storage medium storing therein a program or instruction. The program or instruction, when executed by a processor, implements various processes of the collision processing method embodiment, and the same technical effects may be achieved, which will not be described in detail herein again to avoid repetition.

The processor is a processor in the user equipment in the foregoing embodiment. The readable storage medium includes a computer-readable storage medium, for example, a read-only memory (read-only memory, ROM), a random access memory (random access memory, RAM), a magnetic disk, an optical disc or the like.

This embodiment of this application further provides a chip. The chip includes a processor and a communication interface. The communication interface is coupled to the processor. The processor is configured to run a program or instruction on a network-side device to implement various processes of the collision processing method embodiment, and the same technical effects may be achieved, which will not be described in detail herein again to avoid repetition.

It should be understood that, the chip mentioned in this embodiment of this application may also be referred to as a system-level chip, a system chip, a chip system, a system on chip, or the like.

It should be noted that, the term " include", "comprise" or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Without more limitations, elements defined by the sentence "including one" does not exclude that there are still other same elements in the processes, methods, objects, or apparatuses. In addition, it should be noted that the scope of the methods and apparatuses in the implementations of this application is not limited to performing functions in the order shown or discussed, and may further include performing functions in a substantially simultaneous manner or in a reverse order according to the functions involved, for example, the described methods may be performed in an order different from the order described, and various steps may be added, omitted, or combined. In addition, features described with reference to some examples may be combined in other examples.

Through the foregoing description on the implementations, a person skilled in the art can clearly learn that the foregoing embodiment methods may be implemented by using software in combination with a necessary universal hardware platform. Certainly, the embodiment methods may also be implemented by using hardware, but the former is a better implementation in many cases. Based on such an understanding, the technical solutions of the present invention essentially, or the part contributing to the prior art, may be presented in the form of a software product. The computer software product is stored in a storage medium (for example, a ROM/RAM, a magnetic disk, or an optical disc) including several instructions to enable a terminal (which may be a mobile phone, a computer, a server, an air conditioner, a network device, or the like) to perform the methods described in the embodiments of the present invention.

Although the embodiments of this application have been described above with reference to the accompanying drawings, this application is not limited to the specific implementations described above, and the specific embodiments described above are merely exemplary and not limitative.

## Claims

1. A collision processing method, performed by user equipment, UE, the method comprising:
processing (S200), in a case that a time domain resource of an uplink control channel overlaps a time domain resource of at least one uplink shared channel, the uplink control channel and the at least one uplink shared channel in at least the following manner:
multiplexing (S202) the first control information to an uplink shared channel in the at least one uplink shared channel for transmission according to information of the first control information carried on the uplink control channel, wherein
the information of the first control information comprises a priority of the first control information;
**characterized in that** the at least one uplink shared channel comprises a plurality of uplink shared channels; and
the multiplexing (S202) the first control information to an uplink shared channel in the at least one uplink shared channel for transmission according to information of the first control information carried on the uplink control channel comprises:
in a case that pieces of control information in the first control information have a same priority, and the plurality of uplink shared channels comprise a first uplink shared channel, multiplexing the first control information to the first uplink shared channel in the plurality of uplink shared channels for transmission; and
in a case that pieces of control information in the first control information have a same priority, and the plurality of uplink shared channels do not comprise a first uplink shared channel, multiplexing the first control information to a second uplink shared channel in the plurality of uplink shared channels for transmission, wherein
a priority of the first uplink shared channel is the same as the priority of the first control information.

2. The method according to claim 1, wherein the information of the first control information further comprises at least one of the following: a quantity of bits of the first control information, and a type of the first control information.

3. The method according to claim 1, wherein the plurality of uplink shared channels are uplink shared channels that meet a multiplexing time.

4. A collision processing apparatus (600), comprising: a multiplexing module (601), wherein the multiplexing module (601) is configured to:
process, in a case that a time domain resource of an uplink control channel overlaps a time domain resource of at least one uplink shared channel, the uplink control channel and the at least one uplink shared channel in at least the following manner:
multiplex the first control information to an uplink shared channel in the at least one uplink shared channel for transmission according to information of the first control information carried on the uplink control channel, wherein
the information of the first control information comprises a priority of the first control information;
**characterized in that** the at least one uplink shared channel comprises a plurality of uplink shared channels; and the multiplexing module (601) is configured to:
in a case that pieces of control information in the first control information have a same priority, and the plurality of uplink shared channels comprise a first uplink shared channel, multiplex the first control information to the first uplink shared channel in the plurality of uplink shared channels for transmission; and
in a case that pieces of control information in the first control information have a same priority, and the plurality of uplink shared channels do not comprise a first uplink shared channel, multiplex the first control information to a second uplink shared channel in the plurality of uplink shared channels for transmission, wherein
a priority of the first uplink shared channel is the same as the priority of the first control information.

5. The collision processing apparatus (600) according to claim 4, wherein the information of the first control information further comprises at least one of the following: a quantity of bits of the first control information, and a type of the first control information.

6. The collision processing apparatus (600) according to claim 4, wherein the plurality of uplink shared channels are uplink shared channels that meet a multiplexing time.

7. A readable storage medium, storing a program or instruction, wherein the program or instruction, when executed by a processor, implements the steps of the collision processing method according to any one of claims 1 to 3.

## Patentansprüche

1. Verfahren zur Kollisionsverarbeitung, das von einem Benutzergerät, UE, durchgeführt wird, wobei das Verfahren umfasst:
Verarbeiten (S200), in einem Fall, dass eine Zeitdomänenressource eines Uplink-Steuerkanals eine Zeitdomänenressource von mindestens einem gemeinsam genutzten Uplink-Kanal, dem Uplink-Steuerkanal und dem mindestens einen gemeinsam genutzten Uplink-Kanal auf mindestens die folgende Weise überlappt:
Multiplexen (S202) der ersten Steuerinformationen an einen gemeinsam genutzten Uplink-Kanal in dem mindestens einen gemeinsam genutzten Uplink-Kanal zur Übertragung gemäß Informationen der ersten Steuerinformationen, die auf dem Uplink-Steuerkanal übertragen werden, wobei die Informationen der ersten Steuerinformationen eine Priorität der ersten Steuerinformationen umfassen;
**dadurch gekennzeichnet, dass** der mindestens eine gemeinsam genutzte Uplink-Kanal eine Vielzahl von gemeinsam genutzten Uplink-Kanälen umfasst; und
das Multiplexen (S202) der ersten Steuerinformationen an einen gemeinsam genutzten Uplink-Kanal in dem mindestens einen gemeinsam genutzten Uplink-Kanal zur Übertragung gemäß Informationen der ersten Steuerinformationen, die auf dem Uplink-Steuerkanal übertragen werden, umfasst:
in einem Fall, dass Teile von Steuerinformationen in den ersten Steuerinformationen dieselbe Priorität aufweisen und die Vielzahl von gemeinsam genutzten Uplink-Kanälen einen ersten gemeinsam genutzten Uplink-Kanal umfasst, Multiplexen der ersten Steuerinformationen an den ersten gemeinsam genutzten Uplink-Kanal in der Vielzahl von gemeinsam genutzten Uplink-Kanälen zur Übertragung; und
in einem Fall, dass Teile von Steuerinformationen in den ersten Steuerinformationen dieselbe Priorität aufweisen und die Vielzahl von gemeinsam genutzten Uplink-Kanälen keinen ersten gemeinsam genutzten Uplink-Kanal umfasst, Multiplexen der ersten Steuerinformationen an einen zweiten gemeinsam genutzten Uplink-Kanal in der Vielzahl von gemeinsam genutzten Uplink-Kanälen zur Übertragung, wobei
eine Priorität des ersten gemeinsam genutzten Uplink-Kanals dieselbe wie die Priorität der ersten Steuerinformationen ist.

2. Verfahren nach Anspruch 1, wobei die Informationen der ersten Steuerinformationen ferner mindestens eine der Folgenden umfassen: eine Menge von Bits der ersten Steuerinformationen und eine Art der ersten Steuerinformationen.

3. Verfahren nach Anspruch 1, wobei die Vielzahl von gemeinsam genutzten Uplink-Kanälen gemeinsam genutzte Uplink-Kanäle sind, die eine Multiplexzeit erfüllen.

4. Vorrichtung zur Kollisionsverarbeitung (600), umfassend: ein Multiplexmodul (601), wobei das Multiplexmodul (601) zu Folgendem konfiguriert ist:
Verarbeiten, in einem Fall, dass eine Zeitdomänenressource eines Uplink-Steuerkanals eine Zeitdomänenressource von mindestens einem gemeinsam genutzten Uplink-Kanal, dem Uplink-Steuerkanal und dem mindestens einen gemeinsam genutzten Uplink-Kanal auf mindestens die folgende Weise überlappt:
Multiplexen der ersten Steuerinformationen an einen gemeinsam genutzten Uplink-Kanal in dem mindestens einen gemeinsam genutzten Uplink-Kanal zur Übertragung gemäß Informationen der ersten Steuerinformationen, die auf dem Uplink-Steuerkanal übertragen werden, wobei die Informationen der ersten Steuerinformationen eine Priorität der ersten Steuerinformationen umfassen;
**dadurch gekennzeichnet, dass** der mindestens eine gemeinsam genutzte Uplink-Kanal eine Vielzahl von gemeinsam genutzten Uplink-Kanälen umfasst; und das Multiplexmodul (601) zu Folgendem konfiguriert ist:
in einem Fall, dass Teile von Steuerinformationen in den ersten Steuerinformationen dieselbe Priorität aufweisen und die Vielzahl von gemeinsam genutzten Uplink-Kanälen einen ersten gemeinsam genutzten Uplink-Kanal umfasst, Multiplexen der ersten Steuerinformationen an den ersten gemeinsam genutzten Uplink-Kanal in der Vielzahl von gemeinsam genutzten Uplink-Kanälen zur Übertragung; und
in einem Fall, dass Teile von Steuerinformationen in den ersten Steuerinformationen dieselbe Priorität aufweisen und die Vielzahl von gemeinsam genutzten Uplink-Kanälen keinen ersten gemeinsam genutzten Uplink-Kanal umfasst, Multiplexen der ersten Steuerinformationen an einen zweiten gemeinsam genutzten Uplink-Kanal in der Vielzahl von gemeinsam genutzten Uplink-Kanälen zur Übertragung, wobei
eine Priorität des ersten gemeinsam genutzten Uplink-Kanals dieselbe wie die Priorität der ersten Steuerinformationen ist.

5. Vorrichtung zur Kollisionsverarbeitung (600) nach Anspruch 4, wobei die Informationen der ersten Steuerinformationen ferner mindestens eine der Folgenden umfassen: eine Menge von Bits der ersten Steuerinformationen und eine Art der ersten Steuerinformationen.

6. Vorrichtung zur Kollisionsverarbeitung (600) nach Anspruch 4, wobei die Vielzahl von gemeinsam genutzten Uplink-Kanälen gemeinsam genutzte Uplink-Kanäle sind, die eine Multiplexzeit erfüllen.

7. Lesbares Speichermedium, das ein Programm oder eine Anweisung speichert, wobei das Programm oder die Anweisung bei Ausführung durch einen Prozessor die Schritte des Verfahrens zur Kollisionsverarbeitung nach einem der Ansprüche 1 bis 3 implementiert.

## Revendications

1. Procédé de traitement de collision, mis en œuvre par un équipement utilisateur, UE, le procédé comprenant :
traiter (S200), dans le cas où une ressource de domaine temporel d'un canal de commande de liaison montante chevauche une ressource de domaine temporel d'au moins un canal partagé de liaison montante, le canal de commande de liaison montante et l'au moins un canal partagé de liaison montante d'au moins de la manière suivante :
multiplexer (S202) les premières informations de commande sur un canal partagé de liaison montante dans l'au moins un canal partagé de liaison montante pour la transmission selon des informations des premières informations de commande transportées sur le canal de commande de liaison montante, dans lequel
les informations des premières informations de commande comprennent une priorité des premières informations de commande ;
**caractérisé en ce que** l'au moins un canal partagé de liaison montante comprend une pluralité de canaux partagés de liaison montante ; et
le multiplexage (S202) des premières informations de commande sur un canal partagé de liaison montante dans l'au moins un canal partagé de liaison montante pour la transmission selon des informations des premières informations de commande transportées sur le canal de commande de liaison montante comprend :
dans le cas où des éléments d'informations de commande dans les premières informations de commande ont une même priorité, et où la pluralité de canaux partagés de liaison montante comprennent un premier canal partagé de liaison montante, multiplexer les premières informations de commande sur le premier canal partagé de liaison montante dans la pluralité de canaux partagés de liaison montante pour la transmission ; et
dans le cas où des éléments d'informations de commande dans les premières informations de commande ont une même priorité, et où la pluralité de canaux partagés de liaison montante ne comprennent pas un premier canal partagé de liaison montante, multiplexer les premières informations de commande sur un second canal partagé de liaison montante dans la pluralité de canaux partagés de liaison montante pour la transmission, dans lequel
une priorité du premier canal partagé de liaison montante est identique à celle des premières informations de commande.

2. Procédé selon la revendication 1, dans lequel les informations des premières informations de commande comprennent en outre au moins l'un des éléments suivants : un nombre de bits des premières informations de commande, et un type des premières informations de commande.

3. Procédé selon la revendication 1, dans lequel la pluralité de canaux partagés de liaison montante sont des canaux partagés de liaison montante qui respectent un temps de multiplexage.

4. Appareil de traitement de collision (600), comprenant : un module de multiplexage (601), dans lequel le module de multiplexage (601) est configuré pour :
traiter, dans le cas où une ressource de domaine temporel d'un canal de commande de liaison montante chevauche une ressource de domaine temporel d'au moins un canal partagé de liaison montante, le canal de commande de liaison montante et l'au moins un canal partagé de liaison montante, d'au moins de la manière suivante :
multiplexer les premières informations de commande sur un canal partagé de liaison montante dans l'au moins un canal partagé de liaison montante pour la transmission selon des informations des premières informations de commande transportées sur le canal de commande de liaison montante, dans lequel
les informations des premières informations de commande comprennent une priorité des premières informations de commande ;
**caractérisé en ce que** l'au moins un canal partagé de liaison montante comprend une pluralité de canaux partagés de liaison montante ; et le module de multiplexage (601) est configuré pour :
dans le cas où des éléments d'informations de commande dans les premières informations de commande ont une même priorité, et où la pluralité de canaux partagés de liaison montante comprennent un premier canal partagé de liaison montante, multiplexer les premières informations de commande sur le premier canal partagé de liaison montante dans la pluralité de canaux partagés de liaison montante pour la transmission ; et
dans le cas où des éléments d'informations de commande dans les premières informations de commande ont une même priorité, et où la pluralité de canaux partagés de liaison montante ne comprennent pas un premier canal partagé de liaison montante, multiplexer les premières informations de commande sur un second canal partagé de liaison montante dans la pluralité de canaux partagés de liaison montante pour la transmission, dans lequel
une priorité du premier canal partagé de liaison montante est identique à celle des premières informations de commande.

5. Appareil de traitement de collision (600) selon la revendication 4, dans lequel les informations des premières informations de commande comprennent en outre au moins l'un des éléments suivants : un nombre de bits des premières informations de commande, et un type des premières informations de commande.

6. Appareil de traitement de collision (600) selon la revendication 4, dans lequel la pluralité de canaux partagés de liaison montante sont des canaux partagés de liaison montante qui respectent un temps de multiplexage.

7. Support de stockage lisible, stockant un programme ou une instruction, dans lequel le programme ou l'instruction, lorsqu'il/elle est exécuté(e) par un processeur, met en œuvre les étapes du procédé de traitement de collision selon l'une quelconque des revendications 1 à 3.
